# EUROPEAN PATENT APPLICATION

(11) **EP 1 755 276 A1**
(43) Date of publication of application: **21.02.2007**
(21) Application number: 04745648.8
(22) Date of filing: 07.06.2004
(51) Int. Cl.: H04L 12/28

(54) **COMMUNICATION CONTROL METHOD**

(71) Applicant: FUJITSU LIMITED, Kawasaki-shi, Kanagawa 211-8588 (JP)
(72) Inventor: IWAMOTO, Katsunori, Fujitsu Network Techn. Ltd., Yokohama-shi, Kanagawa 2220033 (JP); SATO, Yoshiharu, Fujitsu Network Technologies Ltd., Yokohama-shi, Kanagawa 2220033 (JP); YAMAMURA, Shinya, Fujitsu Network TechnologiesLtd, Yokohama-shi, Kanagawa 2220033 (JP)
(74) Representative: HOFFMANN EITLE
(86) International application number: PCT/JP2004/007938
(87) International publication number: WO 2005/122482

(57) **Abstract**

Group information is assigned for each communication object and communication data is transmitted by adding the group identifier, thereby realizing a communication control in accordance with the communication object. That is. when a communication device performing radio communication by constituting an ad-hoc network with a plurality of devices communicates with a destination device via at least one of the devices constituting the ad-hoc network, the communication device acquires group information assigned to the communication group having the common object with this communication, references a communication control data table containing communication control information for each of the group information so as to acquire the communication control information corresponding to the group information, adds the group information to the communication information to be transmitted to the destination device so as to generate communication data, identifies a device which relays the communication according to the communication control information, and transmits the communication data to this relay device.

## Description

### BACKGROUND OF THE INVENTION

The present invention relates to a technology of generating communication control information corresponding to a group that utilizes a communication application.

Over the recent years, as devices have been downsized and decreased in their weights owing to developments of micro device technologies, there have increasingly been demands for utilizing communication services in every scene of life including an at-the-mobile-destination scene or an on-moving scene while carrying the device. It is, however, required that base stations be installed with a high density over a wide range in order to meet the demands in existing communication systems, and it is a large obstacle against the actualization to require a tremendous amount of costs for improving the infrastructures.

On the other hand, much attention is paid to an ad hoc network in which the network is configured directly by the communication devices that happen to exist in their peripheries without via a specified host device. The ad hoc network (AD-HOC Network) actualizes the communications not depending on the existing infrastructures in such a way that each individual terminal takes a relay function of the communication, and is expected as a communication means in the event of collapse of the infrastructure as caused by disaster etc and if the infrastructure is not yet completely built up.

A principal technology for actualizing the communication in the ad hoc network is a technology of generating communication control information (route information) corresponding to an architecture of the network that dynamically changes. For example, the IETF (Internet Engineering Task Force) released a draft of a routing protocol for the ad hoc network (refer to Non-Patent document 1). Further, in the wireless communication technology, such a technology is proposed that a virtual communication segment is built up by organizing the terminals into groups (refer to Patent document 1).
[Patent document 1]
Japanese Patent Application Laid-Open Publication No.200-110567
[Non-Patent document 1]
David B. Johnson and two others, "The Dynamic Source Routing Protocol for Mobile Ad Hoc Networks (DSR)", April 15, 2003, searched on May 12, 2004, Internet <htt://ietf.org/internet-drafts/draftietf-manet-dsr-09.txt>

### SUMMARY OF THE INVENTION

It is presumed that the ad hoc network described above is configured by combining a variety of devices each having different processing performance depending on every scene of the communication. Therefore, if the data are randomly transferred to other devices, an excessive load is applied to a relay device that relays the data, and it might be hard to accomplish an aim of this relay device. For example, if dynamic image (moving picture) data targeting at a TV conference etc are transferred to a device targeting at a chat through the communication of text data, there is concern about such a point that the communications as an original object can not be efficiently conducted because of exceeding a presumed throughput. Further, the relay of communications involves an intermediary of a device of the third party, and hence there is also uneasiness about the security.

In this type of network architecture, the communications having the common purpose are organized into the group, and it is effective in terms of making distribution of the information more efficient and the security as well to actualize the communication control corresponding to this group. The prior art described above is, however, incapable of performing the communications in a way that associates the purpose of each device with the communication data, and therefore the communication control corresponding to the group can not be executed.

Such being the case, the present invention actualizes the communication control corresponding to the purpose of the communication by assigning group information (which will hereinafter be also referred to as a group identifier) for every purpose of the communication (which is a communication policy that predetermines what type of communication is purposed) and transmitting the communication data while attaching this group identifier to the communication data.

Therefore, the present invention adopts the following configurations in order to solve the problems. Namely, a communication control method of the present invention, by which a communication device performs communications, comprises a step of acquiring group information assigned to a communication group having a common purpose, a step of acquiring communication control information associated with the group information by referring to a communication control data table stored with the communication control information for every piece of group information, a step of generating the communication data by attaching the group information to the communication information to be transmitted to a destination device, and a step of obtaining a relay device that relays the communication on the basis of the communication control information, and transmitting the communication data to the relay device.

Further, the communication control method may further comprise a step of receiving the communication data from any one of the plurality of devices, a step of reading, if the communication data is addressed to one other device, the group information attached to the communication data, a step of acquiring the communication control information associated with the readout group information from a communication control data table, and a step of transferring the communication data to a next relay device on the basis of the acquired communication control information.

Still further, a communication device of the present invention, which is constructed to perform communications in a network configured by a plurality of devices, comprises a group management unit acquiring, when performing the communication with a destination device via at least one of the devices configuring the network, group information assigned to a communication group having a purpose common to this communication, a storage unit having a communication control data table stored with communication control information for every piece of group information, a control information acquiring unit acquiring the communication control information associated with the group information by referring to the communication control data table, a data generation unit generating communication data by attaching the group information to communication information to be transmitted to the destination device, and a transmission control unit obtaining a relay device that relays the communication on the basis of the communication control information, and transmitting the communication data (via a data transmitting unit) to the relay device.

Then, the communication device may further comprise a data receiving unit receiving the communication data from any one of the plurality of devices, wherein the control information acquiring unit, if the communication data is addressed to one other device, may read out the group information attached to the communication data, and may acquire the communication control information associated with this readout group information from a communication control data table, and the transmission control unit may make the next relay device transfer the communication data on the basis of the acquired communication control information.

Yet further, in the communication control method and the communication device, the group information may be information acquired from outside of the device and may also be information acquired by receiving radio Beacon, reading a radio frequency ID (RFID) or inputting from outside of the device such as an inputting operation by a user.

Moreover, the group information may be a preset piece of internal information. For example, this internal information may be a unique identifier associated with the group information specifying the communication group and may also be part of the communication data information that specifies an application for performing the communication.

Additionally, the communication control data table may be periodically updated, and the update of the communication control data table may also be triggered by transmitting the communication information.
The group information specifying the communication group may be a group identifier uniquely representing the communication group.

When generating the communication data, at least part of the communication data may be encrypted based on the group information.
When generating the communication data by attaching the group information, the communication data may be structured of a header field, an option field and a payload field, a self address and an address of a destination device may be attached to the header field, the group information may be attached to the option field, and the communication information may be attached to the payload field.

When generating the communication data by attaching the group information, the communication data may be assembled into an IPv6-formatted packet, the self address may be set in a source address of the header field of the packet, the address of said destination device may be set in a destination address of the header field, a value representing a purport of using a Hop-by-Hop option may be set in a next header value of the header field, a value showing a group identification option may be set in an option type of the option field of the packet, the group information may be set in option data of the option field, and the communication information may be set in the payload field.

Still yet further, the present invention may be a communication control program that makes the communication device and a computer execute the communication control method.
Moreover, the present invention may be a recording medium on which a computer records the communication control program in a readable manner. The computer reads and executes the program on this recording medium, whereby the functions thereof can be provided.

Herein, the recording medium readable by the computer connotes a recording medium capable of storing information such as data and programs electrically, magnetically, optically, mechanically or by chemical action, which can be read from the computer. Among these recording mediums, for example, a flexible disc, a magneto-optic disc, a CD-ROM, a CD-R/W, a DVD, a DAT, an 8 mm tape, a memory card, etc are given as those demountable from the computer.

Further, a hard disc, a ROM (Read-Only Memory), etc are given as the recording mediums fixed within the computer. Moreover, the network may be an ad hoc network.

The configurations described above may be combined to the greatest possible degree.

The present invention enables the communication control corresponding to the purpose of the communication by assigning the group information for every purpose of the communication and transmitting the communication data in a way that attaches the group identifier to the communication data.

### BRIEF DESCRIPTION OF THE DRAWINGS

FIG. 1 is a view showing an outline of architecture of an ad hoc network according to the present invention.
FIG. 2 is a functional block diagram in the case of conducting group management according to every application in the present invention.
FIG. 3 is a diagram of a data structure of group management data.
FIG. 4 is a diagram of a data structure of communication control data.
FIG. 5 is a flowchart of a processing flow of a group management unit.
FIG. 6 is a flowchart of a processing flow of a communication control unit.
FIG. 7 is a flowchart of the processing flow of the communication control unit (continued from FIG. 6).
FIG. 8 is an explanatory processing sequence showing how the communication control data are generated.
FIG. 9 is an explanatory processing sequence showing how the communication control data are generated (continued from FIG. 8).
FIG. 10 is an explanatory processing sequence showing how the communication information is transmitted.
FIG. 11 is an explanatory processing sequence showing how the communication information is transmitted (continued from FIG. 10).
FIG. 12 is an explanatory processing sequence showing how the communication information is transmitted (continued from FIG. 11).
FIG. 13 is a diagram of an outline of configuration of a working example according to the present invention.
FIG. 14 is a diagram showing an example of a structure of communication control information.
FIG. 15 is a diagram showing an example of a structure of the communication data.
FIG. 16A-16D are a diagrams showing an example of a structure of an environment file.
FIG. 17A-17C are a diagrams showing an example of generating group management data.
FIG. 18 is a diagram showing an example of generating the communication control data.
FIG. 19 is a diagram showing an example of generating the communication control data.
FIG. 20 is a diagram showing an example of generating the communication control data.
FIG. 21 is a diagram showing an example of generating the communication control data.

### DETAILED DESCRIPTION OF THE PREFERRED EMBODIMENT

### <First Embodiment>

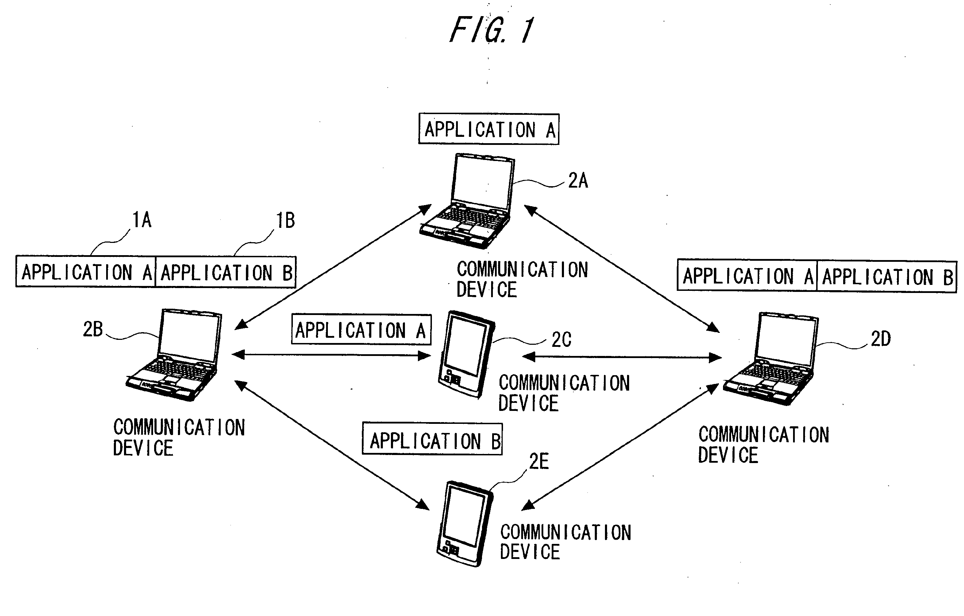

An embodiment of the present invention will hereinafter be described with reference to the drawings. FIG. 1 is a view showing an outline of architecture of an ad hoc communication system of the present invention. The present system is configured by an aggregation of communication devices 2A - 2E on which one or more communication applications 1A, 1B operate. In the present system, the communication devices (wireless terminals) 2A - 2E perform communications within a radio-wave reachable range and configure a temporary network (an ad hoc network), wherein the communications are carried out. Bidirectional arrowheads in FIG. 1 imply that the devices disposed at both ends of the arrowed line can perform the direct communications (namely, the devices exist within the radio-wave mutually reachable range). With this configuration, for example, the communication device 2B and the communication device 2D are unable to conduct the direct communications because of the radio waves being unreachable but can perform the communications via the communication device 2A, 2C or 2E. Note that on the occasion of conducting this type of communications, a partner communication device is referred to as a destination device, and the communication device relaying communication data to this destination device is also termed a relay device for the convenience's sake.

Thus, the communication devices 2A - 2E resultantly execute a forwarding (transfer) process for other devices other than doing the communication processes for themselves, however, it is inefficient to execute the forwarding process unrelated to the self communications. Such being the case, the present system has a scheme to make distribution of the information more efficient and to ensure the security by organizing the common-purposed communications into groups and executing the forwarding process corresponding to the group.

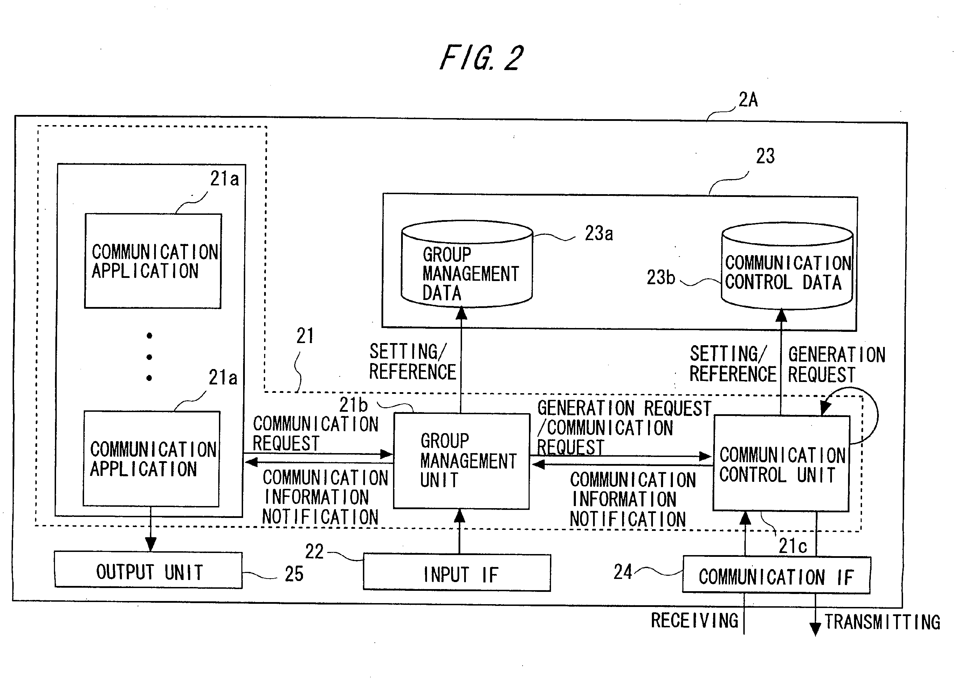

FIG. 2 is an explanatory block diagram showing functions incorporated into the respective communication devices 2 (2A - 2E) configuring the system illustrated in FIG. 1. The communication device 2 is a general type of computer including an arithmetic processing unit 21 constructed of a CPU, a main memory, etc, an input unit 22 receiving the information from outside and inputting the information to the arithmetic processing unit 21, a storage device 23 such as a semiconductor memory and a hard disc, a communication IF 24 performing the communications with other communication devices, and an output unit 25 such as a display and a speaker.

The communication IF (corresponding to a data receiving unit and a data transmitting unit) 24 is an interface that conducts the communications with other communication devices with no intermediary of a specific base station as done by IEEE802.11x, Bluetooth (registered trademark) and so on.

The storage device 23 is stored with application programs for carrying out a TV conference, a chat, etc and with an operating system (OS). Further, the storage device 23 is stored with a group management table, a communication control data table and an environment file.

The input unit 22, which is a keyboard and also a means for receiving an RFID (Radio Frequency Identification) and radio Beacons, receives information specifying a communication purpose, i.e., the information specifying the group from outside, and inputs the information to a group management unit 21b of the arithmetic processing unit 21. Moreover, the input unit 22 may also include a TV camera for inputting information of dynamic images (moving picture) on the occasion of conducting the TV conference, a microphone for inputting voice information on the occasion of doing a voice chat, a keyboard for inputting a message on the occasion of implementing a message service and for operating other communication applications, and so on.

The arithmetic processing unit 21 reads and executes the programs stored in the storage device 23, thus executing a variety of processes. Particularly in the present embodiment, the arithmetic processing unit 21 functions as a communication application unit 21a by executing the communication application, and also functions as a group management unit 21b and a communication control unit 21c by executing an ad hoc communication control program.

### §1. Explanation of Function Blocks

Respective components of function blocks will hereinafter be explained.

### «Communication Application Unit»

The communication applications are application programs for the TV conference, the voice chat, the message service (messenger), etc that operate on the device, and perform transmitting and receiving the communication data to and from the communication applications operating on other devices. Namely, the communication application unit 21a, when performing the communications, executes such a communication request that the group management unit 21b transmits the information inputted from the input unit 22 or the information stored in the storage device 23 to an address of the communication partner device (destination device). Further, when receiving the communication data containing the communication information addressed to the self application from the communication partner device, the communication application unit 21a receives the communication information through notification of the communication information from the group management unit 21b, and outputs the communication information from the output unit 25 or stores the communication information in the storage device 23. For instance, in the case of the communication application for conducting the TV conference, the communication application unit 21a makes the communication partner device transmit the dynamic image (moving picture) information as the communication data from the TV camera, and display the dynamic image on the side of the communication partner device on the display on the basis of the dynamic image information given from the communication partner device.

### «Group Management Unit»

The group management unit 21b is a function unit that manages mapping (associative relation; mapped information) between the communication request given from the communication application unit 21a and a group identifier. This group management unit 21b, on the occasion of performing the communication via at least one of the communication devices 2A - 2E configuring the ad hoc network, acquires group information assigned to the communication group having the purpose common to this communication by referring to a group management data table 23a. Further, the group management unit 21b has, as in the case of a communication Socket, a function of specifying a receiving application on the basis of the data of the received communication information. An in-depth description of this process will be given later on.

### «Group Management Data Table»

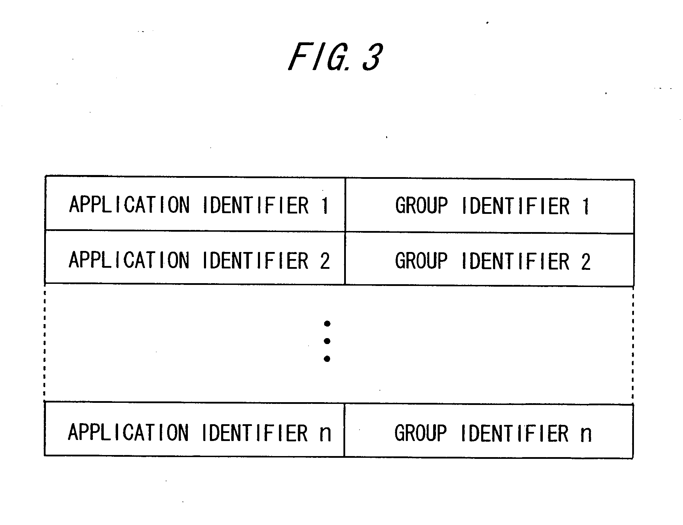

FIG. 3 shows a structure of the group management data table. The group management data table contains the data for management of the mapping (mapped information) between the communication application and the group identifier. It is to be noted that the group identifier shall be a value unique throughout the communication groups and assigned to the communication data. If necessary for distinguishing between, e.g., 256 categories of communication groups and capable of assigning 8-bit binary data to the communication data, the 8-bit binary data can be used as the group identifier. On the other hand, it may be sufficient for the application identifier to be a value from which the communication application operating within the device can be specified, however, the application identifier may be a unique value having one-to-one correspondence with the group identifier, part of data information such as a communication partner device address, a port number and protocol number for specifying the application, and further a combination of these items of information.

### «Communication Control Unit.»

The communication control unit (corresponding to a data generating unit, a control information acquiring unit and a transmission control unit) 21c acquires communication control information associated with the group information by referring to the communication control data table, generates the communication data by attaching the group information to the communication information to be transmitted to the destination device, then obtains the device that relays the communications on the basis of the communication control information, and transmits the communication data to this relay device via the communication interface 24. The communication control corresponding to the communication group is thereby actualized. Details of internal processing will be described later on.

### «Communication control Data Table»

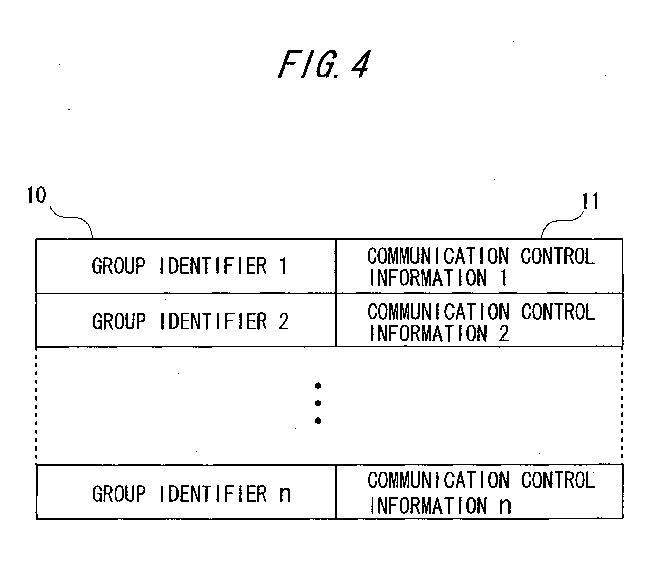

FIG. 4 shows a structure of the communication control data table. Herein, the group identifier is the same as the group identifier shown in FIG. 3, and the communication control information contains necessary items of information, corresponding to a content of the control.

### §2. Processing Flow by Each Function Block

### «Group Management Unit»

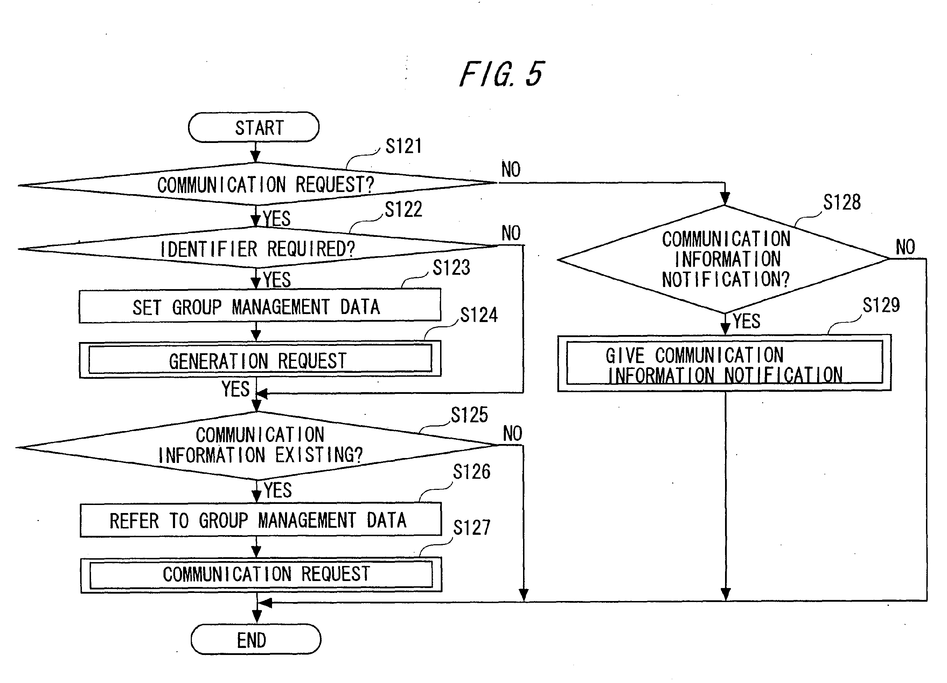

FIG. 5 is a flowchart of a process in which the group management unit associates the communication with the group in accordance with the ad hoc communication control program.

As shown in FIG. 5, the group management unit 21b executes the following steps. In step S121, the group management unit 21b judges whether or not the communication request is received from the communication application. Herein, the group management unit 21b moves to step S122 when receiving the communication request but diverts to step S128 when receiving none of the communication request.

In step S122, the group management unit 21b judges whether or not it is necessary to newly acquire the group identifier matching with the communication request. The judgment as to whether the acquisition is needed or not can be made depending on whether the application identifier associated with the communication concerned has already been registered or not. The application identifier can involve utilizing, e.g., a Socket descriptor number. Specifically, the mapping (mapped information) between an IP address and a port number of the communication partner device and the group identifier is stored as an environment file (internal information) in the storage device 23 in advance of the communications, and the group identifier mapped to (associated with) the IP address and the port number of the communication partner device designated in a Socket open process when starting the communications, is searched out of the environment file. Simultaneously, the Socket descriptor number acquired when succeeding in the Socket open is registered as an application identifier together with the previously-searched-out group identifier in the group management data table. Namely, a tuple of the application identifier and the group identifier, which are associated with the communication, is registered in the group management data table when starting the communications, thereby making it possible to judge from the registration or non-registration of the application identifier whether the communication is associated with the group identifier or not. Herein, the group management unit 21b moves to step S123 if the application identifier is not yet set but diverts to step S125 whereas if already set.

In step S123, the group management unit 21b executes a process of setting the application identifier and the group identifier in the group management data table. In this case, the group management unit 21b acquires the application identifier and the group identifier that are associated with the communication concerned when starting the communications as described above. The application identifier and the group identifier are temporarily set in the group management data table 23a in a way that associates these identifiers with each other and are retained in this table till an end of the communications.

In step S124, the group management unit 21b notifies the communication control unit 21c of a generation request for generating the communication control information. Further, the group management unit 21b notifies the communication control unit 21c of the group identifier acquired in step S123 together with this generation request.

In step S125, the group management unit 21b judges whether or not the communication request given from the communication application unit contains the communication information about the communication applications of other devices. Herein, the group management unit 21b moves to step S126 if the communication information is contained but diverts to an end (of the processing flow) whereas if not contained.

In step S126, the group management unit 21b refers to the group management data table and thus acquires the group identifier associated with the application identifier of the communication information.
In step S127, the group management unit 21b makes the communication request of the communication information with respect to the communication control unit 21c. At this time, the group management unit 21b notifies the communication control unit 21c of the group identifier acquired in step S126 as an attached item of information.

On the other hand, in step S128, the group management unit 21b judges whether or not the notification of the communication information is received from the communication control unit. Herein, the group management unit 21b moves to step S129 if the notification of the communication information is received but diverts to the end (of the processing flow) whereas if not received.

In step S129, the group management unit 21b gives the communication information notification containing the communication information to the communication application.
It should be noted that the group identifier is acquired from the environment file as described above in the present embodiment, however, the group information may be the information inputted from outside of the device via the input unit 22. For example, such a scheme may be taken that if the input unit 22 receives, when starting up the application, the group identifier associated with this application through the radio Beacon, then this application sets the Socket descriptor number acquired when starting the communication as the application identifier, and the group management unit 21b registers the application identifier and the group information in the group management data table 23a in a way that associates the application identifier and the group information with each other.

With this scheme, the radio Beacon and the RFID are set in a communication performing place such as a meeting room, a dinning hall and a factory, wherein the communications may be controlled corresponding to the group identifier acquired in each place by changing the group allocation depending on the place even in the case of the same application.

Further, the mapping (mapped information) between this group identifier and the application identifier may also be inputted by a user from the keyboard (the input unit) and registered in the group management data table.

### «Communication Control Unit»

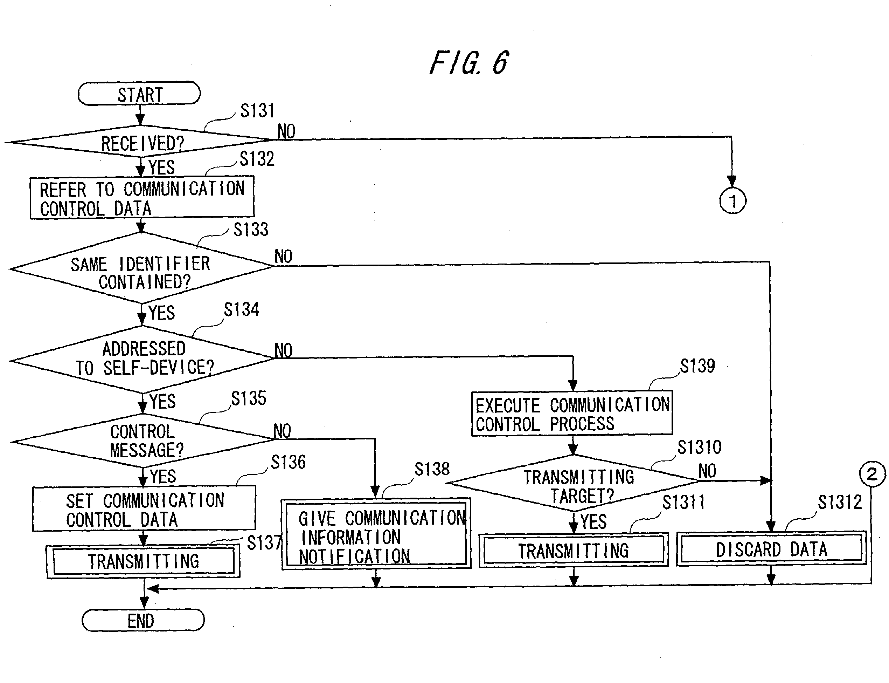

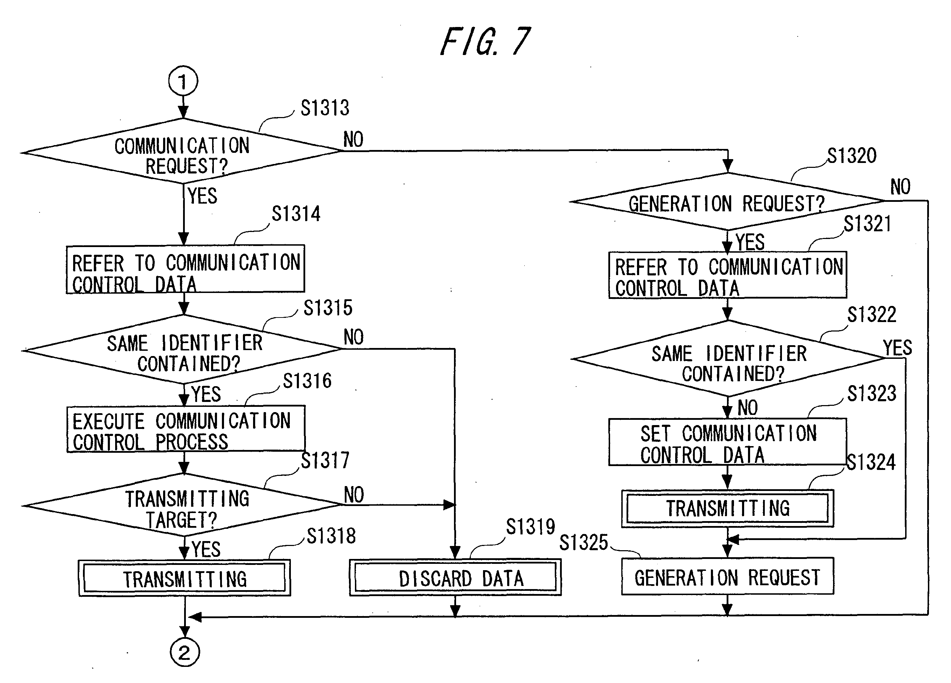

FIGS. 6 and 7 are flowcharts each showing a process in which the communication control unit performs the communication control corresponding to the group identifier on the basis of the ad hoc communication control program.

As shown in FIGS. 6 and 7, the communication control unit 21c, when receiving the communication data, executes the following steps.
In step S131, the communication control unit 21c judges whether or not the communication data are received from outside of the device. Herein, the communication control unit 21c moves to step S132 if the communication data are received from outside of the device but diverts to step S1313 if the data are received from within the device.

In step S132, the communication control unit 21c refers to the communication control data table by using, as a search key, the group identifier contained in the communication data received in step S131.
In step S133, the communication control unit 21c judges from a search result in step S132 whether or not the communication control data table contains the associated group identifier. Herein, the communication control unit 21c moves to step S134 if contained in this table but diverts to step S1312 whereas if not contained.

In step S134, the communication control unit 21c refers to header information of the received communication data, thereby judging whether the communication data are addressed to the self device or not. Herein, the communication control unit 21c moves to step S135 if addressed to the self device but diverts to step S139 whereas if not addressed to the self device.

In step S135, the communication control unit 21c judges whether the received information is a control message or not. Herein, the communication control unit 21c moves to step S136 if being the control message but diverts to step S138 whereas if not being the control message.

In step S136, the communication control unit 21c sets the communication control information associated with the group identifier in the communication control data table.
In step S137, the communication control unit 21c transmits a response to the control message as the necessity may arise. Note that the necessity or non-necessity for the response and transmission timing depend on a generation policy of the communication control information and are not therefore limited in particular. Namely, if the communication control information is frequently updated and if desired to get the update following up in realtime, the response may be sent back immediately.

In step S138, the communication control unit 21c gives the communication information notification containing the received communication data to the group management unit 21b.
In step S139, the communication control unit 21c executes the communication control process on the basis of the communication control information associated with the group identifier referred to in step S132. For instance, the communication control unit 21c extracts the communication control information associated with the group identifier.

In step S1310, the communication control unit 21c judges, based on the result in step S139, whether the destination device of the received information is a transmission target device or not. For instance, the communication control unit 21c judges that the device is the transmission target device if the communication control information extracted in step S139 contains the destination device (the destination address) and judges that the device is not the transmission target device whereas if not contained. Herein, the communication control unit 21c moves to step S1311 if the device is the transmission target device but diverts to S1312 whereas if not the transmission target device.

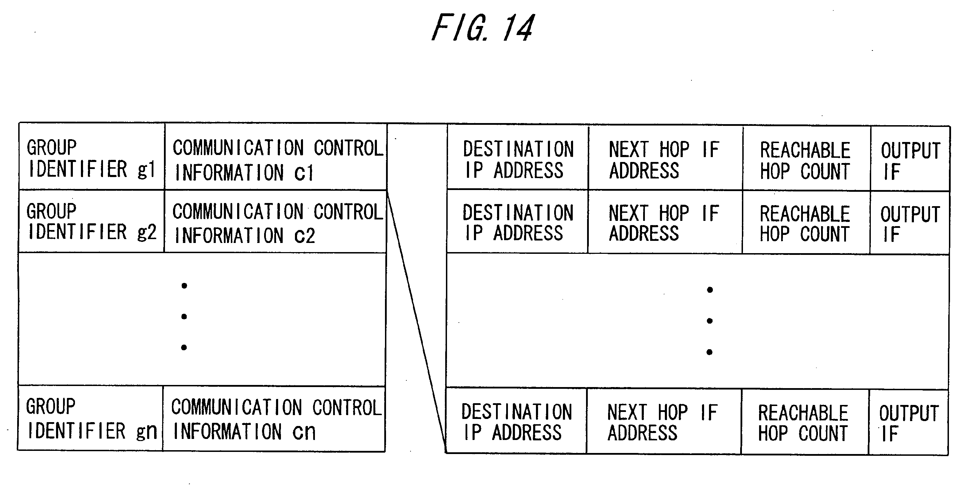

In step S1311, the communication control unit 21c transmits (forwards) the received information to the destination device on the basis of the communication control information. For example, an address (a destination IP address) of the destination device in FIG. 14 and a forwarding destination address (a next hop IF address) are set as the communication control information, in which case the communication control unit 21c forwards the received information to the forwarding destination address associated with the destination address of the received information.

In step S1312, the communication control unit 21c executes a process of discarding the received information.
In step S1313, the communication control unit 21c judges whether the communication request is received from the group management unit 21b or not. Herein, the communication control unit 21c moves to step S1314 if the communication request is received but diverts to step S1320 whereas if not received.

In step S1314, the communication control unit 21c searches the communication control data table for the associated communication control information in a way that uses, as the search key, the group identifier of the communication request received from the group management unit 21b.

In step S1315, the communication control unit 21c judges from the search result in step S1314 whether or not the communication control data table contains the associated group identifier. Herein, the communication control unit 21c moves to step S1316 if contained but diverts to step S1319 whereas if not contained.

In step S1316, the communication control unit 21c executes the communication control process on the basis of the communication control information associated with the group identifier referred to in step S1315. For example, the communication control unit 21c extracts the communication control information associated with the group identifier.

In step S1317, the communication control unit 21c judges, based on the result in step S1316, whether or not the destination device of the information received from the group management unit 21b is the transmission target device. For instance, the communication control unit 21c judges that the device is the transmission target device if the destination device (the destination address) is contained in the communication control information extracted in step S1316, and judges that the device is not the transmission target device whereas if not contained. Herein, the communication control unit 21c moves to step S1318 if being the transmission target device but diverts to step S1319 whereas if not being the transmission target device.

In step S1318, the communication control unit 21c executes a process of transmitting the communication information received from the group management unit 21b to the destination device. At this time, the communication control unit 21c generates the communication data in a predetermined format by attaching the group identifier to the communication information received from the group management unit 21b, then obtains the relay device from the communication control information, and transmits the communication data to this relay device. It is to be noted that when generating the present communication data, part or the whole of the communication data may be encrypted. This encryption prevents unauthorized use of the communication data by the communication devices other than this group, thereby enhancing the security. The encryption based on the group identifier may be attained by setting the group identifier itself as a parameter for the encryption, and the communication data may also be encrypted with a key distributed in a way that associates this key with the group identifier.

In step S1319, the communication control unit 21c executes a process of discarding the communication information received from the group management unit 21b.
In step S1320, the communication control unit 21c judges whether or not the generation request for generating the communication control information is received from the group management unit 21b or the communication control unit itself. Herein, the communication control unit 21c moves to step S1321 if the generation request is received but diverts to the end (of the processing flow) whereas if not received.

In step S1321, the communication control unit 21c searches the communication control data table 23b for the associated communication control information by using, as the search key, the group identifier received from the group management unit or the communication control unit itself.

In step S1322, the communication control unit 21c judges from a search result in step S1321 whether or not the communication control data table contains the associated group identifier. Herein, the communication control unit 21c diverts to step S1325 if contained in this table but moves directly to step S1323 whereas if not contained.

In step S1323, the communication control unit 21c executes a process of setting the group identifier received from the group management unit 21b in the communication control data table 23b.
In step S1324, the communication control unit 21c exchanges the control messages with the other communication device in order to generate the communication control information, receives sent-back data related to the communication control information associated with the group identifier, and registers the communication control information in the communication control data table.

In step S1325, the communication control unit 21c makes the generation request with respect to the communication control unit itself in order to update the communication control information. It should be noted that the necessity or non-necessity for the generation request by the communication control unit itself depends on a generation policy of the communication control information and is not therefore limitative according to the present invention. For instance, the communication control unit 21c sends the control message to the other communication device at an interval of a predetermined period, then receives the sent-back communication control information, and thus periodically updates the communication control data table. Further, the communication control unit 21c sends the control message to the other communication device as it is triggered by transmitting the communication request and the communication information, then receives the sent-back communication control information, and may thus update the communication control data table.

### §3. Processing Sequence

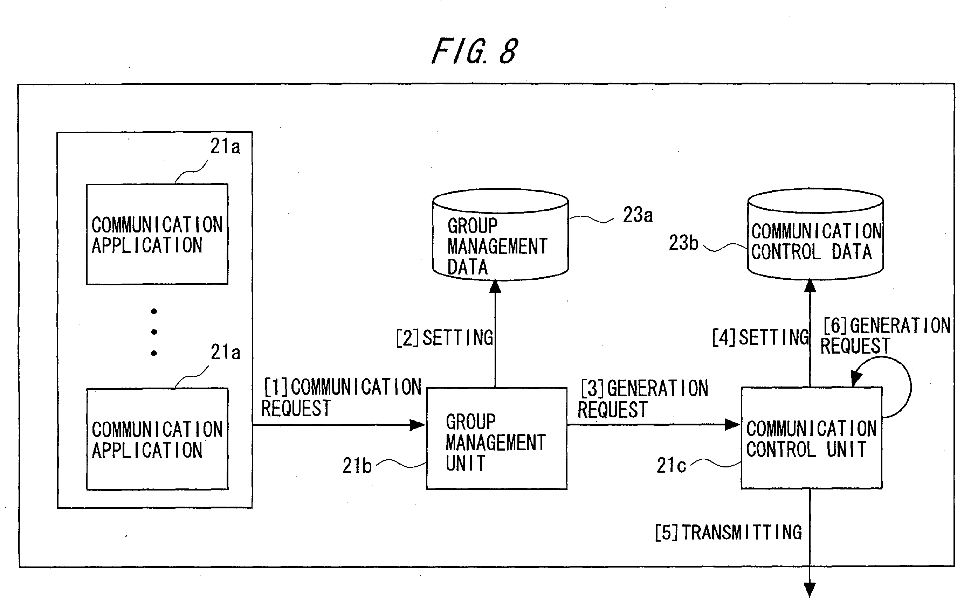

FIGS. 8 - 12 show an execution sequence of the communication control according to the present invention. An in-detail description of the sequence will be given as below.

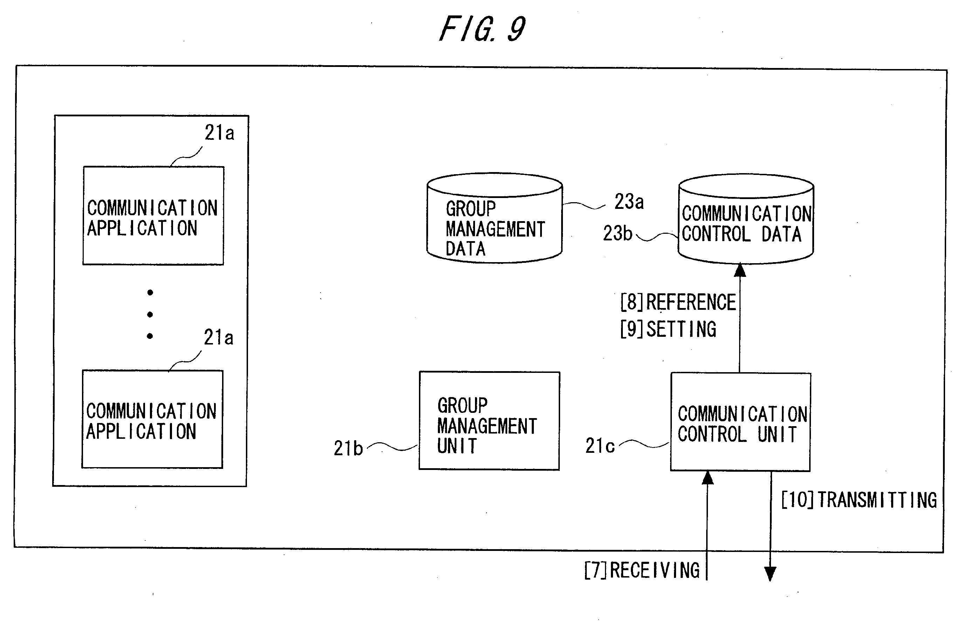

FIG. 8 shows a control message transmission sequence triggered by starting up the communication application, and FIG. 9 shows a communication control data table generation sequence in the device receiving the control message.
(1) The communication application unit 21a makes the communication request with respect to the group management unit 21b as it is triggered by starting up the application or by starting the communications.
(2) The group management unit 21b acquires the group identifier with (1) as a trigger, and sets this group identifier in the group management data table 23a. Further, simultaneously, the group management unit 21b sets the application identifier associated with the concerned communication in the "application identifier" field.
(3) The group management unit 21b makes the generation request containing the group identifier acquired in (2) with respect to the communication control unit.
(4) The communication control unit 21c sets the group identifier received from the group management unit 21b in the communication control data table.
(5) The communication control unit 21c transmits the communication data containing the group identifier received from the group management unit 21b and the control message to the neighboring (next-hop) device (to the next-hop address).
(6) The communication control unit 21c, if required to update the communication control information, makes the generation request with respect to the communication control unit itself at the interval of the predetermined period.
(7) The communication control unit 21c receives the communication data, addressed to the self-device, containing the control message.
(8) The communication control unit 21c, with (7) as a trigger, searches through the communication control data table 23b by using, as the search key, the group identifier contained in the communication data.
(9) The communication control unit 21c, if the table 23b contains the communication control information associated with the group identifier in (8), sets or updates this communication control information on the basis of the information contained in the control message.
(10) The communication control unit 21c sends a response message corresponding to the control message received in (7) according to the necessity.

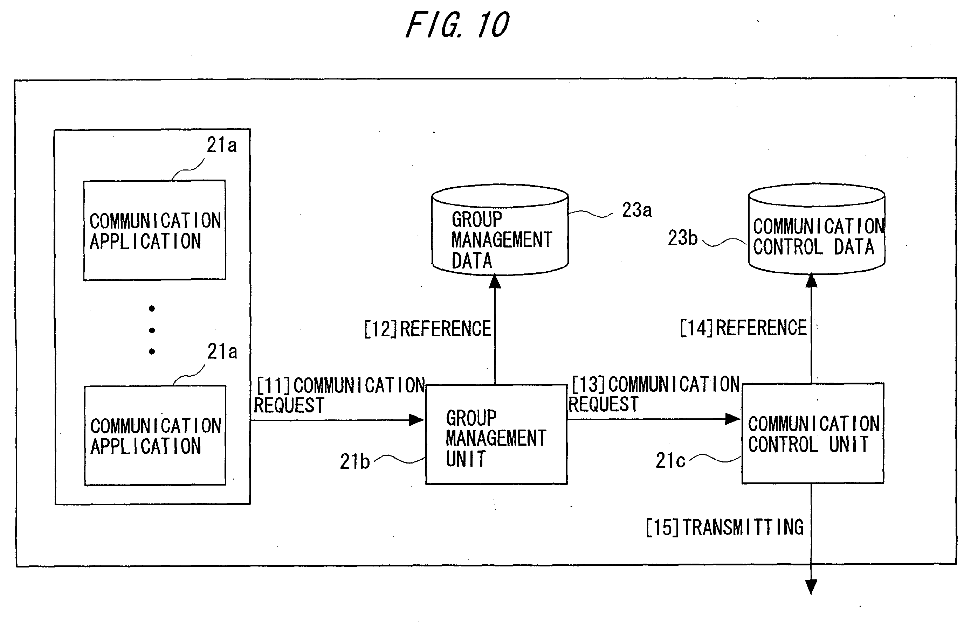

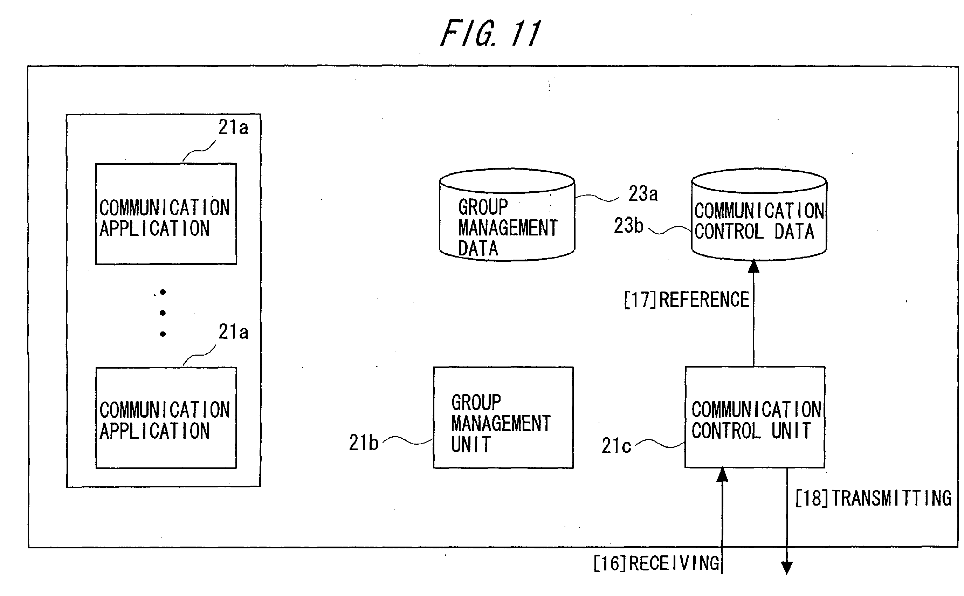

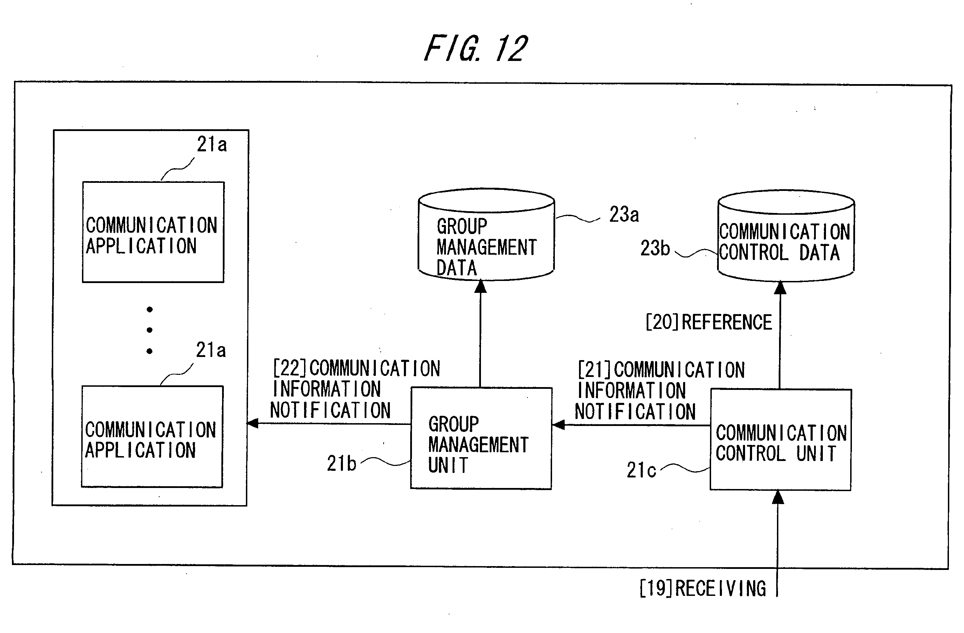

FIGS. 10 through 12 show a transmission sequence of the communication information transmitted and received between the communication applications. FIG. 10 show the transmission sequence in the device on the transmitting side, FIG. 11 shows a relay (forwarding) sequence in the device on the communication route, and FIG. 12 shows a receiving sequence in the device on the receiving side. Note that the relay sequence is not executed if possible of performing the direct communication from the transmitting side device to the receiving side device.
(11) The communication application unit 21a makes the communication request containing the application identifier and the communication information with respect to the group management unit 21b.
(12) The group management unit 21b refers to the group management data table 23a with respect to the received application identifier, and thus acquires the group identifier associated with this application identifier.
(13) The group management unit 21b makes the communication request containing the group identifier acquired in (12) with respect to the communication control unit 21c.
(14) The communication control unit 21c refers to the communication control data table 23b about the group identifier received from the group management unit 21b, and thus acquires the communication control information associated with this group identifier.
(15) The communication control unit 21c transmits, based on the communication control information acquired in (14), the communication data containing the communication information to the neighboring communication device (existing within the radio-wave reachable range). Namely, the communication control unit 21c transmits the communication data to the next-hop address. At this time, in the case of acquiring plural pieces of communication control information as in the case of a plurality of routes leading to the destination device, a scheme may be taken, wherein priority levels defined such as a reachable hop count being small and a communication cost being low are previously determined, and the proper route (the next hop address) is selected corresponding to the priority level.
(16) On the other hand, when the communication data are transmitted from the neighboring communication device, the communication control unit 21c receives the communication data of which a forwarding destination is set to the self-device, i.e., the communication data in which the address of the communication control unit 21c itself is set in the "next hop address" field.
(17) The communication control unit 21c, with (16) as a trigger, acquires the communication control information by referring to the communication control data table 23b, wherein the group identifier contained in the communication data is used as the search key.
(18) The communication control unit 21c transmits the communication data to the forwarding destination device (the next hop address) on the basis of the communication control information associated with the group identifier acquired in (17).
(19) Further, the communication control unit 21c receives the communication data addressed to the address of the communication control unit 21c itself.
(20) The communication control unit 21c, with (19) as a trigger, refers to the communication control data table in a way that employs, as the search key, the group identifier contained in the communication data, and thus acquires the communication control information associated with this group identifier.
(21) The communication control unit 21c, if the table contains the associated communication control information in (20), gives the communication information notification containing the received communication data to the group management unit 21b.
(22) The group management unit 21b obtains, based on the communication data, the communication application associated with this communication, and gives the communication information notification containing the communication information to this communication application.

### [Working Example]

Shown as below is a working example in a case where the present invention is applied to the communication control in an IPv6 (Internet Protocol version 6) network. The IP address is, however, described in an IPv4 format for simplifying the notation. In this example, a scheme that only the device executing the application of the same group is utilized as the relay device, is actualized by the communication control. To specific, a routing table different for every group is generated by utilizing and then extending OLSR (Optimized Link State Routing protocol) defined as a principal routing protocol in the ad hoc network, whereby the relay process corresponding to the group is actualized.

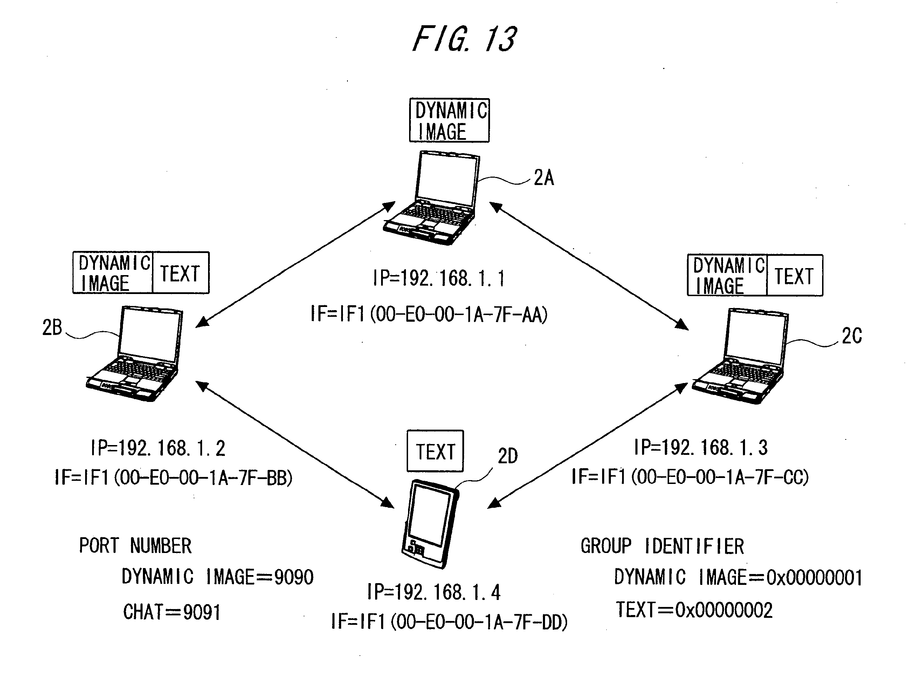

FIG. 13 depicts a system architecture in the present working example. In the present working example, the ad hoc network is configured by four pieces of communication equipment such as the communication devices 2A trough 2D, wherein any one or both of an application performing a dynamic-image-based communication and an application performing a text-based communication operate(s) on these communication devices 2. Further, the communications shall be conducted on the assumption that previously 0x00000001 is assigned as a group identifier to the application performing the dynamic-image-based communication while 0x00000002 is assigned as a group identifier to the application performing the text-based communication, and the former communication is carried out by using a port number "9090" while the latter communication is carried out by using a port number "9091".

FIG. 14 shows an example of a structure of the communication control data table in the present working example. In the present working example, the routing table based on the OLSR protocol corresponds to the communication control table containing the communication control information consisting of such items of data as a destination IP address, a next hop address (which is, e.g., an address of the interface of the forwarding destination device but a MAC address in this example), a reachable hop count and an output interface, which are given for every device within the group.

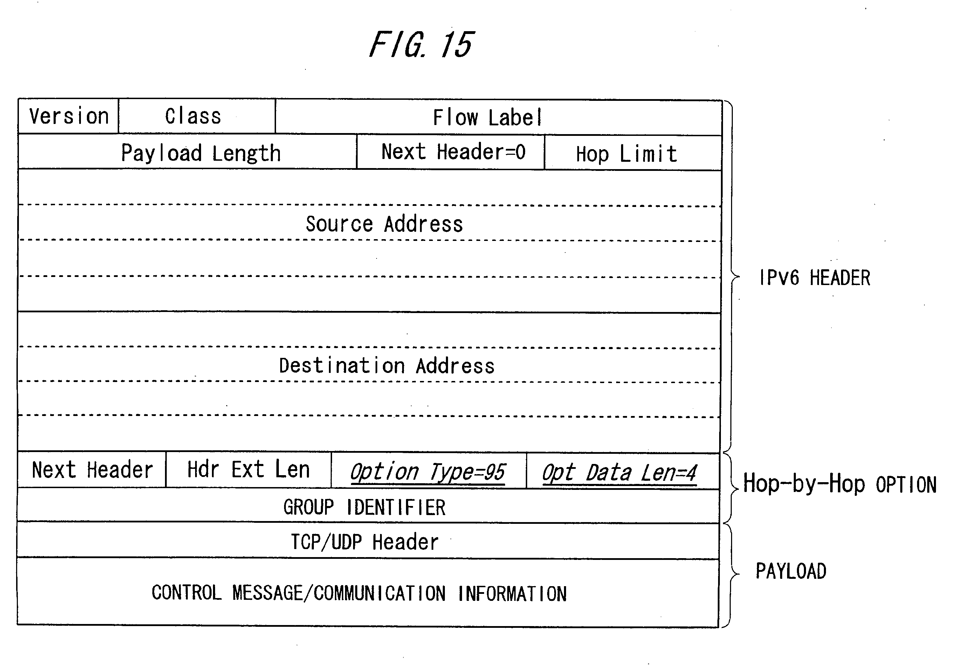

FIG. 15 shows a structure of the communication data containing the control message into which the communication information and the OLSR protocol are extended. According to the present invention, in a Hop-by-Hop option, "Type" for attaching the group identifier is newly defined, and this option is contained in each control message and in the communication information, thereby generating the routing table corresponding to the group and the actualizing the communication control. Note that a value of Option Type is 95 but is not, if taking a value that does not conflict with other options, limited to this value. Moreover, a payload field contains a TCP/UDP (Transmission Control Protocol/User Datagram Protocol) header, the control message defined in the OLSR protocol and the communication information transmitted by the communication application.

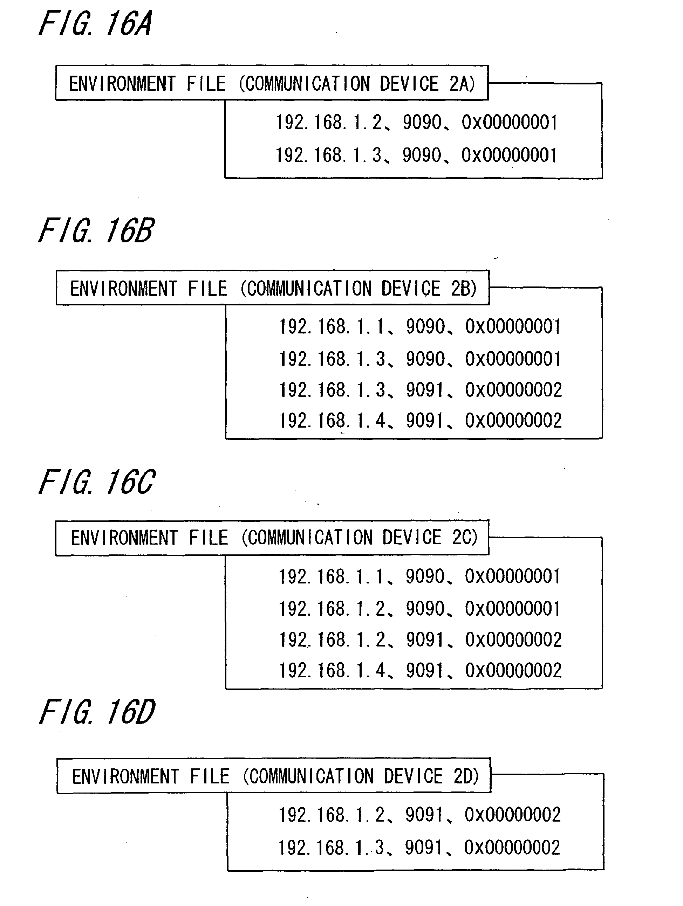

FIG. 16A-16D show an example of a structure of the environment file that is referred to when setting the data in the group management data (step S123). Herein, the environment file is structured of an IP address of the device performing the communications as the device belonging to the same group among the respective devices, a port number of the associated application and the group identifier. For example, the environment file of the communication device 2B shown in FIG. 16B is described in a way that associates the IP addresses, the port numbers and the group identifiers to the communication device 2A (IP address: 192. 168. 1. 1) and the communication device 2C (IP address: 192. 168. 1. 3) that belong to the communication group for the dynamic image application (group identifier: 0x00000001), and to the communication device 2C (IP address: 192. 168. 1. 3) and the communication device 2D (IP address: 192. 168. 1. 4) that belong to the communication group for the text application (group identifier: 0x00000002).

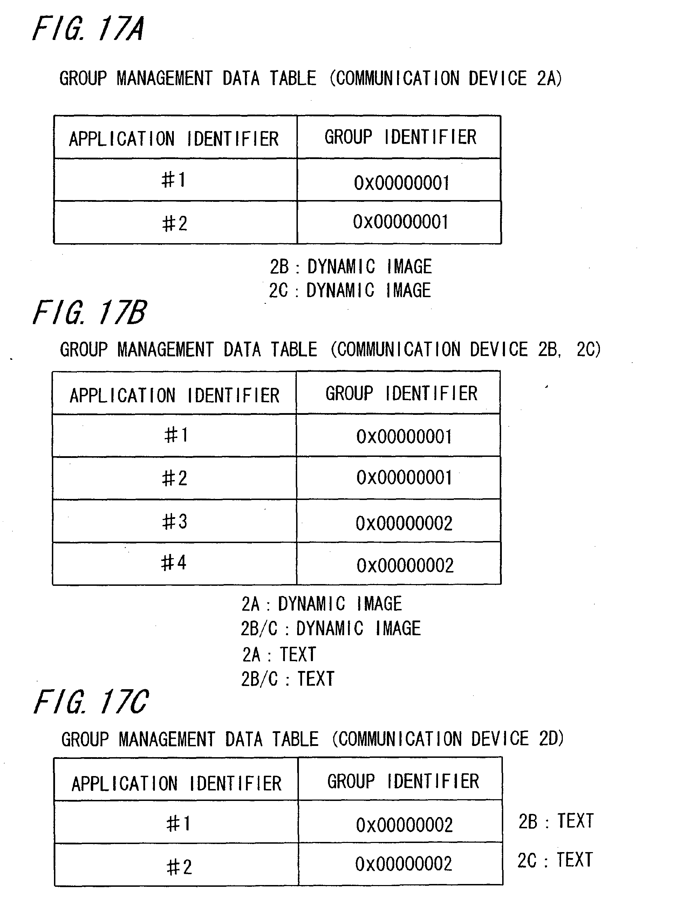

FIG. 17A-17C show an example of setting the group management data set in the communication control data table generation sequence (corresponding to (2) in FIG. 8). Herein, a value of the Socket descriptor acquired when the communication application opens the communication Socket, is utilized as the application identifier. For instance, FIG. 17A illustrates an example in which when the communication device 2A opens the communication Socket for the dynamic image application (port number: 9090) of the communication device 2B (IP address: 192. 168. 1. 2.), a Socket descriptor #1 is acquired as a result of opening the communication Socket simultaneously when obtaining the group identifier (0x00000001) associated therewith from the environment file, and, when opening the communication Socket for the dynamic image application (port number: 9090) of the communication device 2C (IP address: 192. 168. 1. 3), the group identifier (0x00000001) associated therewith and a Socket descriptor #2 are acquired. The communication application hereafter performs the communications by designating this Socket descriptor, and hence the group management unit 21b can associate the communication (the communication application) and the group identifier with each other on the basis of this Socket descriptor.

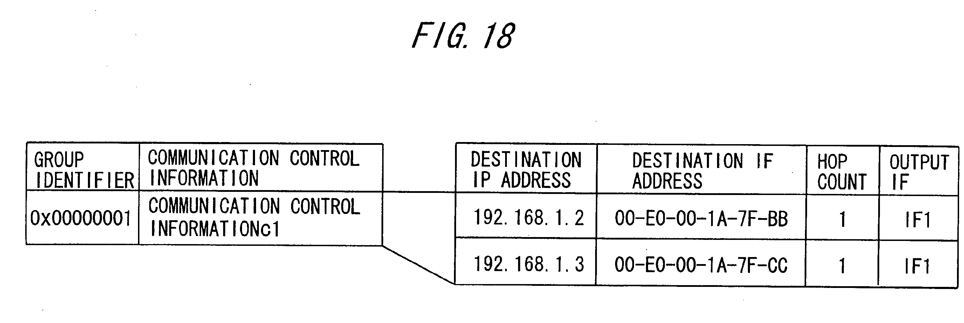

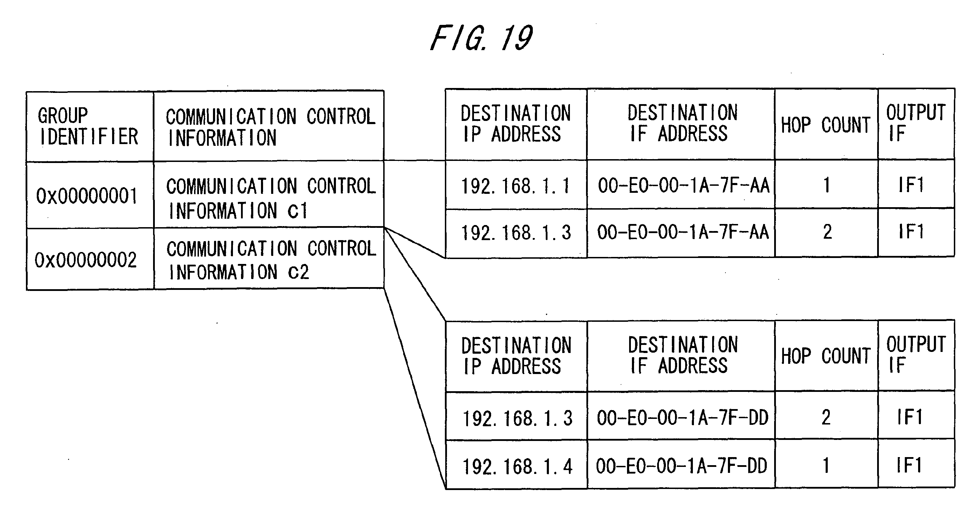

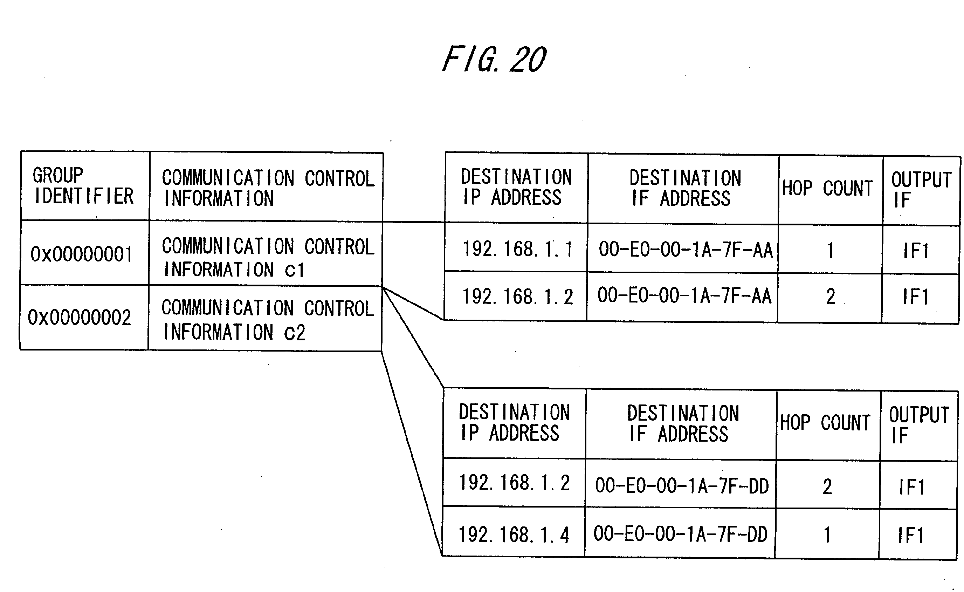

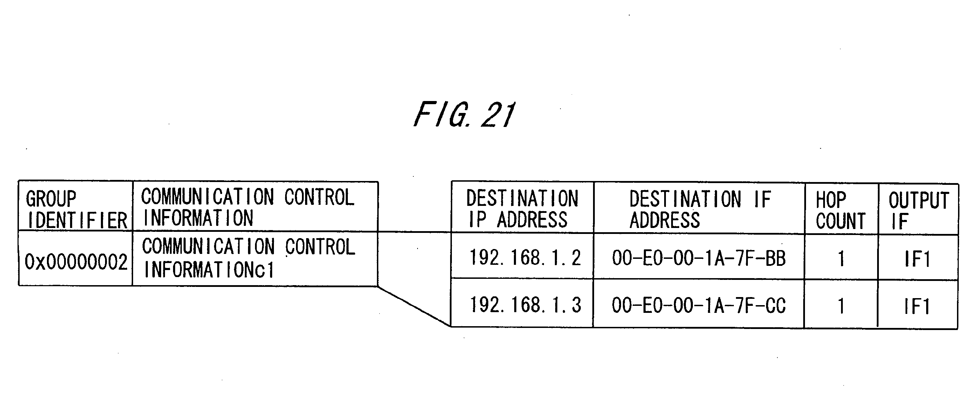

FIGS. 18 through 21 show examples of structures of the communication control data tables (the communication control information) generated as a result of executing the communication control data table generation sequence. FIG. 18 shows the communication control data table (the communication control information) generated on the communication device 2A, wherein the communication control data table contains the communication control information for the communication with the communication device 2B (IP address: 192. 168. 1. 2) and the communication control information for the communication with the communication device 2C (IP address: 192. 168. 1. 3) with respect to the dynamic image application (0x000000001).

When the communication device 2B performs, based on the group management data and the communication control information that are set with the contents described above, the communication for the dynamic image application with the communication device 2C, at first, the communication application designates the Socket descriptor (the application identifier) #2 and thus makes the communication request with respect to the group management unit 21b. The group management unit 21b extracts the associated group identifier by referring to the group management data table 23a, and makes the communication request containing the group identifier and the communication information with respect to the communication control unit 21c. The communication control unit 21c refers to the communication control data table on the basis of the group identifier and transmits the communication data to a destination IF address (00-E0-00-1A-7F-AA) in the case of setting the communication device 2C (IP address: 192. 168. 1. 3) as a destination in communication control information c1. The communication device 2A receives the communication data addressed to the self IF address, then refers to the communication control data table 23b on the basis of the group identifier contained in the communication data, and transmits the communication data to a destination IF address (00-E0-00-1A-7F-CC) in the case of setting the communication device 2C (IP address: 192. 168. 1. 3) as the destination.

Further, the communication device 2C receives the communication data addressed to the self IF address, and, upon recognizing that the communication data are the data addressed to the self-device, gives the communication information notification containing the communication data to the group management unit 21b. The group management unit 21b specifies the communication application on the basis of the communication data, and gives the communication information notification containing the communication information to the communication application concerned.

From the above, the communication data of the dynamic image application group, which are addressed to the communication device 2C from the communication device 2B, are communicated via the communication device 2A belonging to the same group. On the other hand, the communication data of the text application group, which are addressed to the communication device 2C from the communication device 2B, are communicated via the communication device 2D.

As described above, according to the present embodiment, the communication applications for performing the common-purposed communications are organized into the groups, and the generation of the communication control information corresponding to the group and the communication control corresponding to the group are actualized, whereby the communication control matching with the purpose of the established communication can be attained by the communication devices belonging to the same group. According to the working example described above, it is possible to actualize the communications employing, as the relay device, only the device executing the application of the same group by applying the present invention. Namely, the network virtually closed within the (same) group can be configured. This scheme enables avoidance of such a case that the communication device exhibiting low processing performance is hindered from executing the process desired by this device itself due to a load of the process of relaying the communication information, which is caused by the communications unrelated to this communication device itself. Further, none of the communication data is forwarded to the device not belonging to the same group, whereby the security can be enhanced.

### <Industrial Applicability>

The present invention can be preferably applied to the case where the communications are conducted between the devices of the members who are temporarily assembled such as exchanging the information at an in-office meeting and at an event hall.

## Claims

1. A communication control method, by which a communication device performs communications, comprising:
a step of acquiring group information assigned to a communication group having a common purpose;
a step of acquiring communication control information associated with the group information by referring to a communication control data table stored with the communication control information for every piece of group information;
a step of generating the communication data by attaching the group information to the communication information to be transmitted to a destination device; and
a step of obtaining a relay device that relays the communication on the basis of the communication control information, and transmitting the communication data to said relay device.

2. A communication control method according to claim 1, further comprising:
a step of receiving the communication data from any one of said plurality of devices;
a step of reading, if the communication data is addressed to one other device, the group information attached to the communication data;
a step of acquiring the communication control information associated with the readout group information from a communication control data table; and
a step of transferring the communication data to a next relay device on the basis of the acquired communication control information.

3. A communication control method according to claim 1, wherein the group information is information acquired from outside of said device.

4. A communication control method according to claim 1, wherein the group information is information acquired by receiving radio Beacon, reading an RFID or inputting from outside of said device such as an inputting operation by a user.

5. A communication control method according to claim 1, wherein the group information is a preset piece of internal information.

6. A communication control method according to claim 5, wherein the preset internal information is a unique identifier associated with the group information specifying the communication group.

7. A communication control method according to claim 6, wherein the preset internal information is part of the communication data information that specifies an application for performing the communication.

8. A communication control method according to any one of claims 1 through 7, wherein said communication control data table is periodically updated.

9. A communication control method according to claim 1, wherein the update of the communication control data table is triggered by transmitting the communication information.

10. A communication control method according to claim 1, wherein the group information specifying the communication group is a group identifier uniquely representing the communication group.

11. A communication control method according to claim 1, wherein said step of generating the communication data includes encrypting at least part of the communication data on the basis of the group information.

12. A communication control method according to claim 1, wherein said step of generating the communication data by attaching the group information includes getting the communication data structured of a header field, an option field and a payload field, attaching a self address and an address of a destination device to the header field, attaching the group information to the option field, and attaching the communication information to the payload field.

13. A communication control method according to claim 1, wherein said step of generating the communication data by attaching the group information includes assembling the communication data into an IPv6-formatted packet, setting the self address in a source address of the header field of the packet, setting the address of said destination device in a destination address of the header field, setting a value representing a purport of using a Hop-by-Hop option in a next header value of the header field, setting a value showing a group identification option in an option type of the option field of the packet, setting the group information in option data of the option field, and setting the communication information in the payload field.

14. A communication device constructed to perform communications in a network configured by a plurality of devices, comprising:
a group management unit acquiring, when performing the communication with a destination device via at least one of said devices configuring said network, group information assigned to a communication group having a purpose common to this communication;
a storage unit having a communication control data table stored with communication control information for every piece of group information;
a control information acquiring unit acquiring the communication control information associated with the group information by referring to said communication control data table;
a data generation unit generating communication data by attaching the group information to communication information to be transmitted to said destination device; and
a transmission control unit obtaining a relay device that relays the communication on the basis of the communication control information, and transmitting the communication data to said relay device.

15. A communication device according to claim 14, further comprising a data receiving unit receiving the communication data from any one of said plurality of devices,
wherein said control information acquiring unit, if the communication data is addressed to one other device, reads out the group information attached to the communication data, and acquires the communication control information associated with this readout group information from a communication control data table, and
said transmission control unit makes said next relay device transfer the communication data on the basis of the acquired communication control information.

16. A communication device according to claim 14, wherein the group information is information acquired from outside of said device.

17. A communication device according to claim 14, wherein the group information is information acquired by receiving radio Beacon, reading an RFID or inputting from outside of said device such as an inputting operation by a user.

18. A communication device according to claim 14, wherein the group information is a preset piece of internal information.

19. A communication device according to claim 18, wherein the preset internal information is a unique identifier associated with the group information specifying the communication group.

20. A communication device according to claim 18, wherein the preset internal information is part of the communication data information that specifies an application for performing the communication.

21. A communication device according to any one of claims 14 through 20, wherein said control information acquiring unit periodically updates said communication control data table.

22. A communication device according to any one of claims 14 through 20, wherein said control information acquiring unit updates the communication control data table as it is triggered by transmitting the communication information.

23. A communication device according to claim 14, wherein the group information specifying the communication group is a group identifier uniquely representing the communication group.

24. A communication device according to claim 14, wherein said data generation unit encrypts at least part of the communication data on the basis of the group information.

25. A communication device according to claim 14, wherein said data generation unit gets the communication data structured of a header field, an option field and a payload field, attaches a self address and an address of a destination device to the header field, attaches the group information to the option field, and attaches the communication information to the payload field.

26. A communication device according to claim 14, wherein said data generation unit assembles the communication data into an IPv6-formatted packet, sets the self address in a source address of the header field of the packet, sets the address of said destination device in a destination address of the header field, sets a value representing a purport of using a Hop-by-Hop option in a next header value of the header field, sets a value showing a group identification option in an option type of the option field of the packet, sets the group information in option data of the option field, and sets the communication information in the payload field.

27. A communication control program operated on a communication device constructed to perform communications in a network configured by a plurality of devices, said program making said communication device executes:
a step of acquiring, when performing the communication with a destination device via at least one of said devices configuring said network, group information assigned to a communication group having a purpose common to this communication;
a step of acquiring communication control information associated with the group information by referring to a communication control data table stored with the communication control information for every piece of group information;
a step of generating communication data by attaching the group information to communication information to be transmitted to said destination device; and
a step of obtaining a relay device that relays the communication on the basis of the communication control information, and transmitting the communication data to said relay device.
